**Europäisches Patentamt**

(19) **European Patent Office**

**Office européen des brevets**

(11) Numéro de publication: **0 097 110**
**B1**

(12) **FASCICULE DE BREVET EUROPEEN**

(45) Date de publication du fascicule du brevet:
01.06.88

(21) Numéro de dépôt: **83450016.7**

(22) Date de dépôt: **08.06.83**

(51) Int. Cl.⁴: **G 07 F 7/10**

(54) **Procédé de contrôle de l'usage de documents réservés.**

(30) Priorité: **08.06.82 FR 8210161**

(43) Date de publication de la demande:
**28.12.83 Bulletin 83/52**

(45) Mention de la délivrance du brevet:
**01.06.88 Bulletin 88/22**

(84) Etats contractants désignés:
**AT BE CH DE FR GB IT LI LU NL SE**

(56) Documents cités:
**neant**

(73) Titulaire: **Bonnaval-Lamothe, Michel, Côte-Belle,
F-33410 Cadillac sur Garonne (FR)**

(72) Inventeur: **Bonnaval-Lamothe, Michel, Côte Belle,
F-33410 Cadillac (FR)**
Inventeur: **Grafeille, Jean-Marie, 181 rue Georges
Mandel, F-33000 Bordeaux (FR)**

(74) Mandataire: **Thébault, Jean-Louis, Cabinet Jean-Louis
Thébault 50, Cours de Verdun, F-33000 Bordeaux (FR)**

EP 0 097 110 B1

ACTORUM AG

**Description**

La présente invention se rapporte au contrôle de l'usage de documents réservés et plus particulièrement à la vérification que le porteur du document réservé qui veut faire usage de celui-ci est bien le véritable titulaire du document ou une personne habilitée à en faire usage.

Par document réservé, on entend ici tout support matériel en matériau quelconque représentant un pouvoir d'achat, une valeur d'argent, un crédit, une autorisation prédéterminée quelconque, réservé au strict titulaire du document et, bien que l'invention s'applique plus particulièrement au domaine bancaire ou monétaire, elle s'étend bien entendu à toute application analogue à d'autres domaines où peuvent, ou pourraient, être utilisés de tels documents au sens large défini plus haut.

De tels contrôles de l'usage de documents de ce genre sont déjà effectués couramment.

On peut citer par exemple, pour rester dans le domaine bancaire ou monétaire, certaines cartes de crédit ou de retrait de billets de banque dans des distributeurs appropriés.

Ces documents, généralement des cartes en matières plastiques, sont codés à l'aide d'un code magnétique à quatre chiffres, c'est-à-dire qu'à chaque chiffre ou combinaison de chiffres correspond sur la carte, dans une zone prédéterminée, une distribution déterminée, et une seule, d'éléments magnétiques discrets selon une loi ou clé de correspondance tenue bien entendu secrète par le concepteur de la carte.

Si ce mode de codage est relativement difficile à violer, il présente néanmoins plusieurs inconvénients.

Au niveau de l'utilisateur, on constate que celui-ci a un certain mal à retenir quatre chiffres sans signification particulière puisqu'imposés par le promoteur de la carte, ce qui le conduit souvent à inscrire en clair la combinaison de sa carte sur un support généralement également serré avec la carte dans le même porte-carte ou portefeuille, voire sur la carte elle-même. On s'explique par là-même les relativement nombreuses fraudes constatées sur des cartes volées.

Par ailleurs, quoique relativement difficile à percer, un codage magnétique à quatre chiffres n'est pas absolument inviolable si on veut bien s'en donner la peine, avec les moyens de calculs actuels et de la patience. Toutefois, cette inviolabilité ne peut pas être étendue puisqu'une combinaison à quatre chiffres semble, pour les raisons évoquées ci-dessus, la limite du mémorisable que l'on puisse demander à l'usager moyen.

Au niveau du promoteur et du fabricant de la carte ce type de codage est relativement coûteux et il est hors de question de l'appliquer à des supports de valeur intrinsèque quasi nulle et éphémère, c'est-à-dire ne servant qu'une fois et étant détruit ou inutilisé ensuite.

Le brevet US-A-3 786 420 illustre un procédé conforme au préambule de la revendication 1.

Dans l'exemple décrit dans ce brevet, le document porte une transcription codée d'une combinaison secrète constituée de 4 chiffres dont seul le premier est laissé au choix du titulaire, les autres étant déterminés par un appareil appartenant à la banque délivrant le document, ce qui entraîne les inconvénients indiqués plus haut dus aux difficultés de mémorisation d'une combinaison à quatre chiffres non librement choisis et à la faible sécurité apportée par une combinaison de quatre chiffres seulement.

Le but de la présente invention est de perfectionner ce procédé notamment aux plans de la sécurité et de la facilité d'usage.

A cet effet, l'invention a pour objet un procédé pour réserver l'usage d'un document, tel qu'un chèque, au seul titulaire ou porteur habilité, ledit document comportant, dans une zone prédéterminée, une transcription codée d'une combinaison secrète détenue par le titulaire ou le porteur habilité, ladite transcription codée se présentant sous la forme d'une matrice à n lignes et p colonnes portant une information binaire aux intersections ligne-colonne, dans lequel, au moment de l'usage du document, le porteur de ce dernier fournit une combinaison à un dispositif de lecture du document qui lit également la transcription codée portée par le document et qui détermine s'il y a concordance ou non, caractérisé en ce que:

– avant la mise en service du document, le titulaire fournit de manière confidentielle à un dispositif d'encodage la combinaison secrète susdite, constituée d'un ensemble de lettres et/ou chiffres quelconques, choisie arbitrairement par lui-même et connue de lui seul, le dispositif d'encodage génère ladite transcription codée de cette combinaison suivant un code indéchiffrable prédéterminé et on incorpore ensuite au document la transcription codée telle qu'elle est produite par le dispositif d'encodage, et

– au moment de l'usage du document, la combinaison fournie par le porteur au dispositif de lecture est transcrite suivant le même code pour comparaison avec la transcription codée lue sur le document.

L'utilisation d'un tel procédé apporte une sécurité et une facilité d'usage accrues car on pourra utiliser, entre autres, des combinaisons de plus de quatre lettres qui seront avantageusement composées par les futurs titulaires avant la fabrication de leur document et qui seront donc choisies de façon à être facilement retenues de mémoire, l'usage des lettres, un plus grand nombre de signes codés (six, sept, huit ou davantage), ainsi que le codage aléatoire, constituant des facteurs dissuasifs absolus de reconstitution par l'analyse combinatoire de l'information codée si l'on ne connaît pas les éléments du code.

La mise en place du procédé de l'invention s'opère, d'une part, par l'émission, dans le domaine bancaire, par exemple, de chèques strictement conformes aux normes légales mais portant une combinaison codée que le titulaire du chéquier est le seul à connaître et, d'autre part, par l'installation, en particulier chez les commerçants, les guichets de sociétés, d'administrations, etc. . . d'appareils de contrôle permettant de vérifier si le porteur du chèque présenté est bien le titulaire du chéquier ou tout au moins une personne connaissant la combinaison codée et habilitée (ou considérée comme telle) à user dudit chèque. Systématiquement ou au gré du commerçant ou du préposé, le porteur du chèque serait invité à se prêter à un tel contrôle en introduisant son chèque dans l'appareil et composant sur le clavier la combinaison codée qu'il est censé connaître, à la manière de ce qui se passe actuellement avec les cartes de crédit permettant le retrait de billets de banque.

Suivant une caractéristique essentielle de l'invention, un tel système présente une sécurité encore renforcée par le fait de la totale discrétion lors de la transcription des combinaisons secrètes choisies par les utilisateurs. Celle-ci s'opère, en effet, par exemple chez le banquier, à l'aide d'un dispositif d'encodage approprié qui transcrit la combinaison choisie en une transcription codée exactement conforme à celle devant figurer sur le document.

Une telle transcription codée est totalement indéchiffrable, y compris par le banquier qui n'a, à aucun moment, connaissance de la combinaison choisie, et peut donc circuler sans danger ce qui assure une totale sécurité lors de la fabrication postérieure du document.

D'autres caractéristiques et avantages du procédé de l'invention ressortiront de la description qui va suivre d'un mode de mise en œuvre, description donnée à titre d'exemple uniquement et en regard des dessins annexés sur lesquels:

– Fig. 1 illustre un modèle de chèque codé,

– Fig. 2 illustre un exemple de code hexadécimal utilisable pour la mise en œuvre du procédé selon l'invention,

– Fig. 3 illustre un mode de distribution des emplacements de bits sur la matrice de codage,

– Fig. 4a et 4b illustrent deux exemples de codage de deux combinaisons différentes,

– Fig. 5 représente un schéma fonctionnel d'un dispositif de lecture-contrôle de document,

– Fig. 6 représente un schéma fonctionnel d'un dispositif d'encodage,

– Fig. 7 représente une matrice codée suivant un autre mode de réalisation,

– Fig. 8 représente un organigramme de détermination d'une matrice codée selon la Fig. 7, et

– Fig. 9 représente schématiquement la structure d'un lecteur conçu pour la lecture des matrices de la Fig. 7.

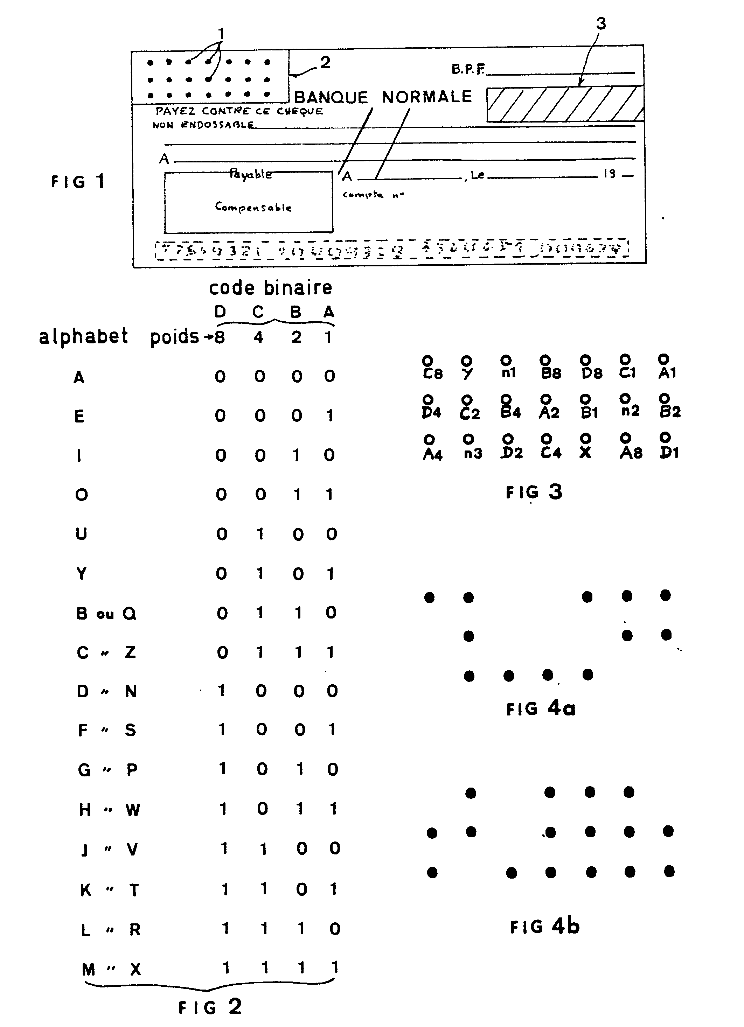

La figure 1 illustre un chèque bancaire normalisé muni d'un code représenté visuellement par un alignement de points noirs 1 groupés dans une zone bien précise 2 du chèque.

Cette zone 2 située dans l'angle supérieur gauche du chèque est, avec une seconde zone possible 3 située en haut à droite, les deux endroits du recto où, suivant les normes actuelles, il serait possible de porter un codage, ce dernier pouvant éventuellement être porté au verso du chèque.

Les points 1 répartis régulièrement suivant une matrice de trois lignes de sept points chacune délimitent les emplacements de codage, c'est-à-dire les emplacements où se trouve une information binaire constituée, par exemple, par la présence ou non d'un petit disque noir imprimé facilement détectable par un système photoélectrique. Il est évident que tout autre système de représentation binaire pourrait être substitué aux disques imprimés ou non, tel que la présence ou l'absence de perforations, d'un support magnétique discret, etc. . . les moyens de lecture de ce code étant évidemment agencés en conséquence, ces moyens opérant par voie photoélectrique magnétique, électrique, par contact physique, etc. . .

Le matériau et la forme des disques ou points 1 peuvent aussi bien entendu varier dans de larges mesures.

Dans la réalité, certains seulement des disques 1 seront portés, d'une manière ou d'une autre, sur le chèque, comme illustré par exemple par les Figures 4a, 4b, suivant le nom à coder.

Suivant le mode de réalisation représenté sur les dessins, on part d'un code hexadécimal faisant correspondre aux 26 lettres de l'alphabet, regroupées pour les besoins de la cause en 16 caractères (dix couples de lettres ayant la même représentation binaire), une représentation binaire sur les quatre poids binaires 8, 4, 2, 1.

On a vu plus haut que la matrice de codage utilisée comporte vingt et un emplacements de bits. Seize de ces emplacements sont utilisés pour le codage hexadécimal conformément à la grille de la figure 2, cependant que trois emplacements sont utilisés pour définir le nombre de lettres du mot ou combinaison à coder, ainsi que l'emplacement des lettres de la combinaison choisie codées, et qu'enfin les deux derniers emplacements sont utilisés pour le positionnement (suivant deux axes rectangulaires de référence) du chèque dans l'appareil de lecture-contrôle.

La figure 3 illustre à titre d'exemple un mode de distribution des trois types d'emplacement ci-dessus sur la matrice de codage à vingt et un bits.

Les seize emplacements affectés au codage hexadécimal permettent de coder quatre lettres dont l'ordre est repéré par l'une des lettres DCBA.

Ainsi, dans l'exemple de la figure 3, la première lettre codée de la combinaison choisie aura pour le poids binaire 1 l'emplacement $D_1$ avec une valeur 0 ou 1 selon que la lettre en question comporte en fonction de la grille de la figure 2 une valeur 0 ou 1 au poids 1. Pour le poids binaire 2, elle aura l'emplacement $D_2$ avec une valeur 0 ou 1 et ainsi de suite pour les poids 4 et 8. La seconde lettre codée sera affectée aux emplacements $C_1$, $C_2$, $C_4$ et $C_8$ et les troisième et dernière lettres seront affectées aux emplacement $B_1$, $B_2$, $B_4$, $B_8$ et $A_1$, $A_2$, $A_4$, $A_8$ respectivement.

L'emplacement des lettres de la combinaison choisie qui seront à coder sont déterminées par un code aléatoire faisant correspondre au nombre de lettres de la combinaison choisie une valeur binaire suivant trois poids introduite dans les trois

emplacements $n_1$, $n_2$, $n_3$. Le choix de ce code permet de déterminer pour chaque combinaison choisie (entre 4 et 11 lettres) l'emplacement (ou le rang) des quatre lettres retenues dans cette combinaison pour être codées.

Le choix de ce code, des emplacements des bits sur la matrice et de la grille de correspondance du code hexadécimal assurent une sécurité quasi absolue contre toute tentative de retrouver la combinaison choisie si l'on ne connaît pas les grilles ou clefs de codage.

Les deux derniers emplacements repérés X et Y de la matrice de la figure 3 correspondent au positionnement du chèque.

Les figures 4a et 4b illustrent la transcription codée telle qu'elle peut apparaître dans la zone 2 du chèque, de deux combinaisons, en l'occurrence les deux prénoms Christiane (Figure 4a) et Michel (Figure 4b).

Pour Christiane, les lettres codées sont par exemple les 3°, 5°, 7° et 10°, soit les lettres R, S, I et E ce qui se traduit par la matrice suivante en utilisant le code de la figure 2:

$$D_8 D_4 D_2 D_1 \quad C_8 C_4 C_2 C_1 \quad B_8 B_4 B_2 B_1 \quad A_8 A_4 A_2 A_1 \quad n_3 n_2 n_1$$
$$1\,1\,1\,0 \quad 1\,1\,0\,1 \quad 0\,0\,1\,0 \quad 0\,0\,0\,1 \quad 1\,1\,0$$

La représentation codée telle que représentée sur les figures 4a, 4b est rigoureusement indéchiffrable si l'on ne connaît pas la nature des codes.

Etant donné la simplicité et le très faible coût du report de telles transcriptions codées sur un support quelconque, on peut envisager bien des applications et, en premier lieu, sur des documents tels que des chèques ou documents bancaires, postaux, monétaires, financiers ou analogues ne servant qu'une fois.

Le report ou l'application d'un code tel que ceux des figures 4a et 4b peut se faire, en effet, par impression directe sur les chèques ou analogues, voire même en même temps que l'impression des chèques.

Grâce au procédé selon l'invention, le titulaire du compte bancaire pourra choisir pour coder ses chéquiers une combinaison qui lui sera facile à retenir.

Du fait de la personnalisation du codage et de sa facilité à mémoriser, le titulaire n'aura plus la tentation d'inscrire quelque part sa combinaison par crainte de l'oublier, avec les conséquences que cela comporte, comme on l'a vu plus haut à propos des cartes de retrait de billets de banque.

Mais l'intérêt le plus important avec un tel système est la sécurité quasi totale assurée à la personne recevant en paiement un tel chèque dans la mesure bien entendu où elle procèdera au contrôle de l'habilitation du porteur du chèque à user de celui-ci.

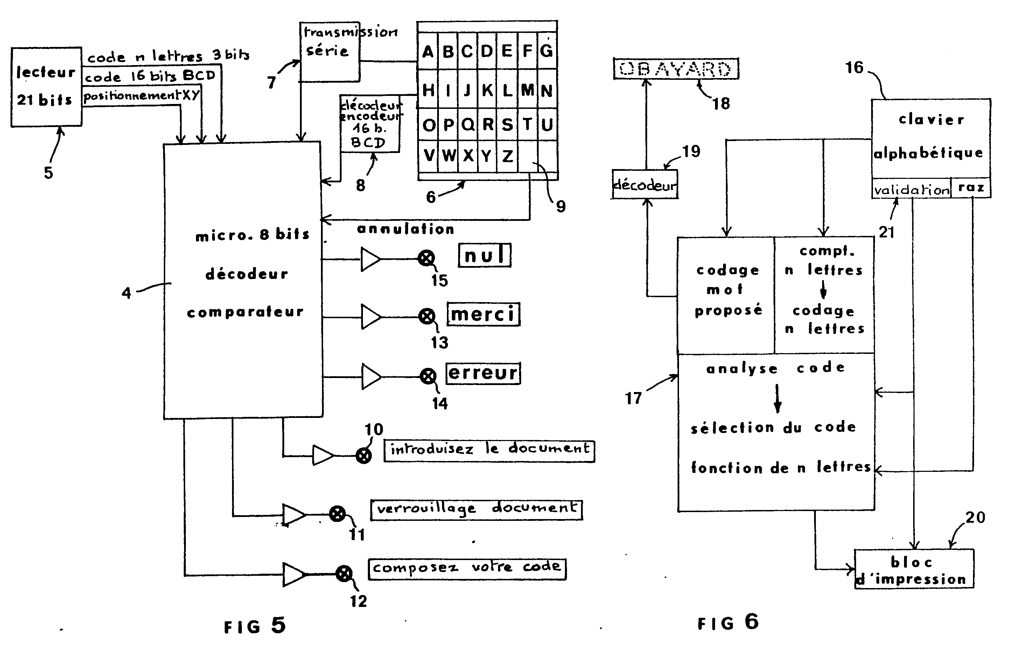

A cet effet, on a représenté sur la figure 5 un schéma fonctionnel d'un dispositif capable d'effectuer une lecture-contrôle de tels documents.

Sur cette figure 5, on a représenté en 4 un microprocesseur 8 bits de décodage-comparaison relié, d'une part, à un ensemble 5 de lecture des 21 emplacements de codage de la zone 2 du chèque et, d'autre part, à un clavier alphabétique 6 d'introduction des informations par le porteur de chèque.

Le lecteur 5 fournit les informations relatives aux trois types de bits codés mentionnés plus haut.

Le clavier 6 est relié au micro-processeur 4 par l'intermédiaire d'un circuit 7 de transmission série et d'un décodeur-encodeur 8 (seize bits, binaire code décimal). Le clavier 6 est muni, en outre, d'une touche 9 d'annulation reliée au micro-processeur 4.

Le micro-processeur 4 fournit un certain nombre de signaux d'instructions ou d'indications visualisés par exemple par des voyants lumineux.

Le processus de fonctionnement est le suivant. Lorsque le voyant 10 (INTRODUISEZ LE DOCUMENT) est allumé (appareil en service) le porteur du document introduit ce dernier dans une fente ou logement prévu à cet effet dans l'appareil. Si le positionnement est correct, le document est verrouillé, cette opération étant signalée par le voyant 11.

Le lecteur 5 transmet au micro-processeur 4 le code lu cependant que le voyant 12 s'allume et invite le porteur du document à composer sa combinaison, ce qu'il fait en clair en introduisant, grâce au clavier 6, la totalité de la combinaison afférant au document et qu'il est censé connaître.

Il est à noter que, du fait du multiplexage des bits adressés en série par le circuit 7 au micro-processeur 4, l'appareil est inviolable. En cas de vol il ne serait pas possible de percer les caractéristiques du codage utilisé (Fig. 2) puisqu'il est fait appel à des circuits à fonction complexe ne présentant pas de points de mesure.

Le transfert de la combinaison introduite et sa comparaison dans le micro-processeur 4 avec le code lu fait s'allumer le voyant 13 (MERCI) s'il y a correspondance, ou bien le voyant 14 (ERREUR) s'il y a non-correspondance.

Un voyant auxiliaire 15 s'allume en cas d'annulation ou d'interruption du processus d'introduction de la combinaison par le porteur du document.

Si le voyant 13 de correspondance s'allume c'est que, selon toute probabilité, le porteur est bien le titulaire du document ou tout au moins une personne dûment habilitée à user du document par le titulaire.

Un tel procédé et de tels moyens de contrôle sont susceptibles de se généraliser auprès d'un très grand nombre de personnes ou organismes recevant habituellement en règlement de nombreux chèques ou analogues, tels que commerçants, banquiers, guichetiers d'organismes publics ou privés, etc... et sont de nature à réduire très sensiblement l'usage de chèques volés.

En effet, le détenteur d'un chèque volé et qui serait tenté de le présenter en paiement serait aussitôt démasqué en étant invité, au moment du règlement, à faire passer son chèque dans le dispositif de lecture-contrôle selon l'invention.

Les concepteurs de chèques (les banquiers), le titulaire du compte, ainsi que les bénéficiaires, auraient donc ainsi, à divers titres, une garantie et

une sécurité totales avec la généralisation d'un tel système. Les banquiers n'auraient plus à honorer la présentation de chèque volés, le titulaire serait sûr, en cas de perte ou de vol de son chéquier, de ne pas voir son compte débité indûment et les bénéficiaires auraient la garantie de ne pas recevoir en paiement des chèques volés.

Par ailleurs, la généralisation d'un tel système finirait par rendre le vol des chéquiers pratiquement inutile puisque le voleur ne pourrait pratiquement pas s'en servir, ce qui serait de nature à réduire notablement le vol même des chéquiers.

Afin de renforcer encore la sécurité, on a également prévu un dispositif d'encodage assurant une parfaite confidentialité dans la transcription d'une combinaison choisie par un utilisateur sur ses chéquiers.

La figure 6 illustre un schéma fonctionnel d'un tel dispositif. Le but de ce dernier est de permettre à l'utilisateur de composer directement sur un support quelconque la matrice telle que celles des figures 4a, 4b, à partir d'une combinaison choisie par l'utilisateur sans qu'un tiers ait connaissance de la signification en clair de la combinaison codée.

Le dispositif en question comprend un clavier alphabétique 16 relié à un micro-processeur 17 lui-même connecté à un dispositif 18 de visualisation par l'intermédiaire d'un décodeur 19 et à un bloc d'impression 20 (ou un autre système équivalent).

Le micro-processeur 20 assure le codage de la combinaison choisie et introduite par l'intermédiaire du clavier 16, ce codage étant retranscrit en clair et affiché en 18 pour être contrôlé.

Ce codage s'effectue conformément au procédé défini plus haut et suivant les caractéristiques de codage retenues et introduites dans le micro-processeur par le constructeur de ce dernier.

Une fois la combinaison choisie correctement introduite, codée et contrôlée en 18, une touche de validation 21 déclenche l'impression par le bloc 20 d'une matrice de points telle que celles des figures 4a, 4b, sur une carte-support quelconque.

C'est cette carte-support qui sera alors transmise, accompagnée des éléments d'identification de l'utilisateur de l'appareil, à un imprimeur qui éditera les chèques sur chacun desquels sera reporté par impression, en même temps que le chèque, ladite matrice figurant sur la carte-support exactement telle qu'elle apparaît.

L'appareil sera par exemple installé chez le banquier où le titulaire du compte viendra composer lui-même, à l'abri des regards indiscrets, sa combinaison personnelle qui ne sera connue que de lui seul puisque le banquier et l'imprimeur n'aurant connaissance que de la matrice codée totalement indéchiffrable.

Suivant le procédé de l'invention on incorpore la combinaison qui peut être constituée par un mot (ou plusieurs) éventuellement associé à un nombre, dans une zone du chèque prédéterminée, en transcrivant ladite combinaison, ou ensemble de lettres et chiffres, en une matrice constituée d'une distribution aléatoire d'un nombre déterminé de signes ou caractères.

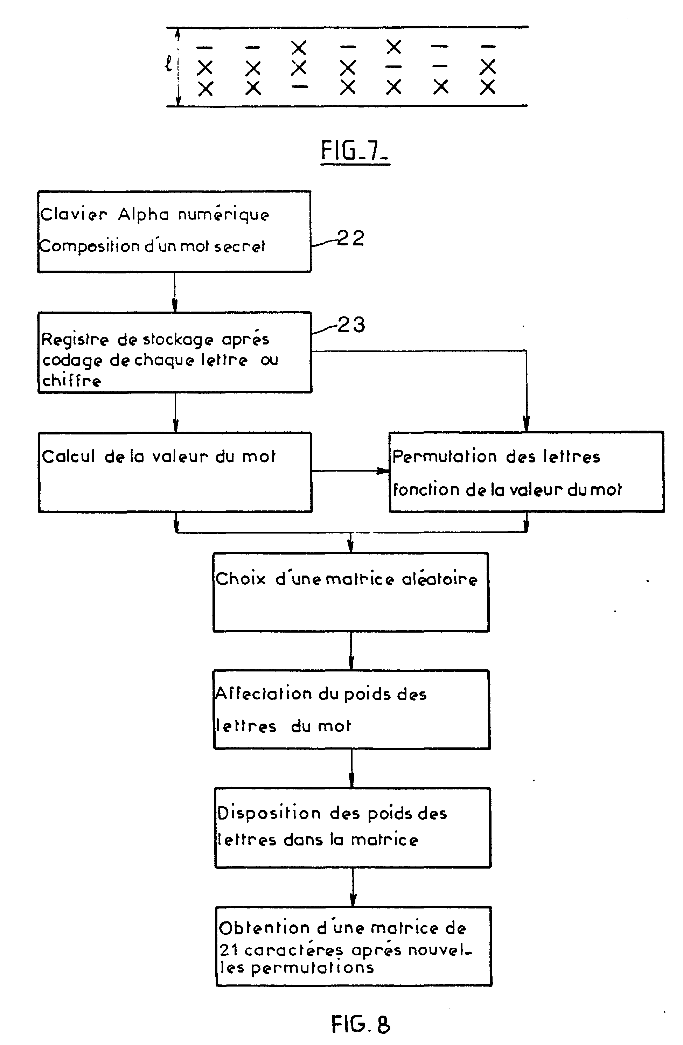

La figure 7 illustre un exemple d'une telle matrice constituée de trois lignes et sept colonnes. A l'intersection de chaque ligne avec chaque colonne se trouve un signe (en l'occurrence un tiret ou une croix). La distribution de ces signes dans la matrice est totalement incompréhensible pour qui n'a pas connaissance du code utilisé.

La matrice de la Figure 7 comporte 21 emplacements comme celles des figures 3, 4a et 4b, toutefois, contrairement à ces dernières, le contenu informatique de la matrice n'est pas une succession de valeurs binaires constituées par l'absence ou la présence d'un élément support d'informations, mais d'une série de signes de deux formes différentes traduisant chacune un état binaire.

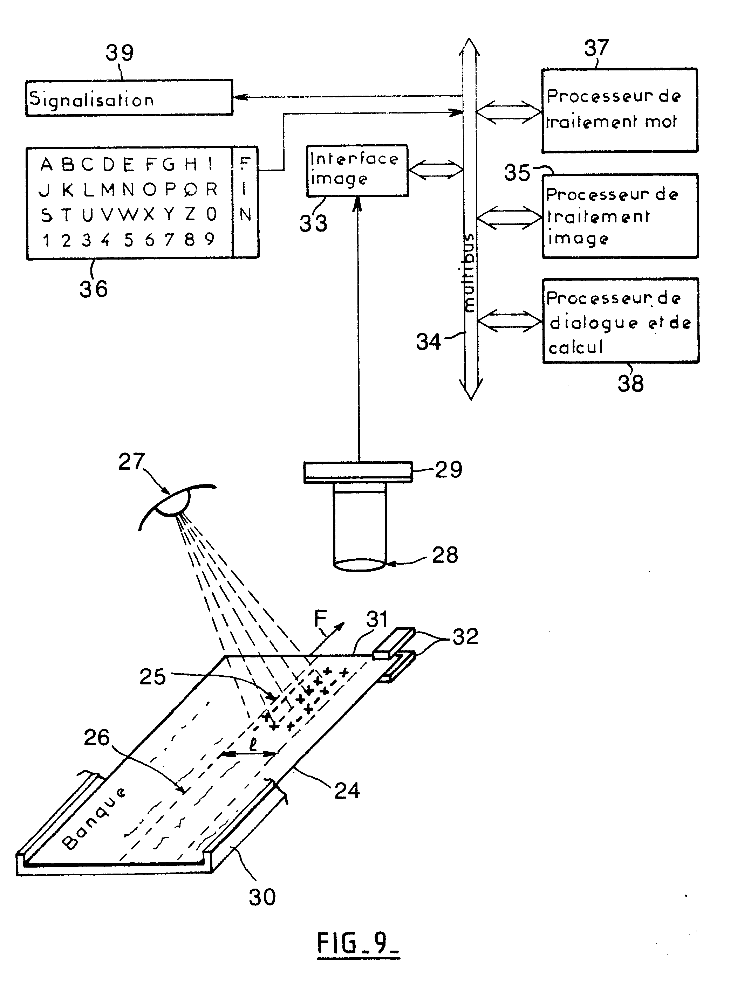

La figure 8 est un organisme illustrant le principe de transcription/codage.

A l'aide d'un clavier alphanumérique 22 on compose la combinaison secrète choisie. Par combinaison on entend un groupe de lettres ayant un sens ou non et auquel peuvent être associés des chiffres.

Le clavier 22 est relié à un registre 23 de stockage après codage de chaque lettre ou chiffre.

Le choix d'une matrice aléatoire est opéré à partir du registre 23 par calcul de la valeur de la combinaison composée et permutation des lettres (ou chiffres) en fonction de la valeur de la combinaison.

Dans cette matrice, on affecte des poids aux diverses lettres (ou chiffres) de la combinaison. Puis on dispose ces poids dans la matrice et l'on obtient, après de nouvelles permutations, une matrice, par exemple de 21 caractères telle que celle de la figure 7.

L'ensemble de ces opérations est réalisé par un système du type représenté sur la Figure 6, c'est-à-dire un clavier alphanumérique 22 relié à un micro-processeur, à un bloc d'impression (tel que 20) et à un organe de visualisation (tel que 18).

Le micro-processeur est agencé de manière à réaliser les opérations de codage, permutation, pondération appropriées. Il existe une infinité de modes de codage pratiquement inviolables.

La figure 2 illustre un mode de codage possible et pour des raisons évidentes de sécurité on ne donnera pas ici d'éléments plus détaillés sur le calcul des codages les plus appropriés.

La matrice codée selon la figure 7 (qui n'est bien entendu qu'un exemple non limitatif) est particulièrement adaptée à l'application de l'invention aux chèques.

Cette matrice, en effet, s'intègre parfaitement dans le processus actuel d'impression des chèques.

Cette impression se passe en trois phases. En une première phase est imprimé le fond du chèque qui est propre à chaque banque. Ce fond est constitué d'éléments communs à tous les clients.

En une seconde phase on imprime les éléments de personnalisation du chèque, c'est-à-dire: nom de l'agence bancaire et code de celle-ci, numéro de téléphone, numéro de compte du client, nom et adresse du client et numéro du chèque.

La troisième phase consiste à imprimer le code barre composé de codes interbancaires et de codes intérieurs propres aux banques.

Ces trois séquences d'impression intéressent trois zones distinctes bien délimitées du chèque.

La matrice de la Figure 7 peut s'intégrer parfaitement dans la séquence de la seconde phase d'impression (personnalisation du chèque).

L'impression des chèques s'opérant à l'aide d'imprimantes rapides disposant d'un jeu de caractères alphanumériques et de signes, la matrice de la Figure 7 peut s'imprimer par ces imprimantes au cours de ladite seconde phase et sans aucune perte de temps. En effet, l'impression des éléments de personnalisation se fait sur au moins trois lignes d'impression et n'occupe qu'une fraction seulement de la zone du chèque affectée à cette impression. Dans le reste de cette zone il est possible de faire imprimer par l'imprimante les signes de la matrice codée sans perte de temps puisque les têtes d'impression balaient systématiquement toutes les lignes de la zone d'impression considérée et sur toute leur longueur, quelle que soit l'importance des éléments de personnalisation traditionnels.

La matrice suivant la figure 7 est facilement intégrable dans le support informatique fourni par la banque à l'imprimeur et portant toutes les données nécessaires à l'impression complète des chèques.

La matrice de la figure 7 une fois reportée sur le chèque sera lue par un dispositif de lecture schématisé sur la figure 9, lequel sera placé (comme le lecteur de la figure 5) chez n'importe quel organisme ou personne recevant des chèques en règlement.

Sur la figure 9, on a représenté en 24 un chèque codé portant dans une zone 25 de la largeur 1 s'étendant sur trois lignes d'impression (à la suite de la zone 26 réservée à la personnalisation) une matrice codée telle que celle de la figure 7.

La zone codée 25 est éclairée par un dispositif symbolisé en 27 monté sur le lecteur. Au dessus de la zone codée est disposée une optique 28 formant l'image de la matrice codée sur un dispositif photosensible à transfert de charge 29.

L'analyse de la zone codée est faite par le système 28–29 à la volée. Le chèque 24 est, à cette fin, placé sur un chariot mobile schématisé en 30, porté par le lecteur et susceptible de se déplacer (manuellement ou automatiquement) sous le système 28–29.

La lecture est commandée automatiquement dès que, en déplaçant le chariot 30 suivant la flèche F, le bord d'attaque 31 passe dans l'axe du système 28–29, ce passage étant détecté par un dispositif 32 du type à cellule photoélectrique par exemple.

Les 21 caractères de la matrice codée sont lus séquentiellement par le dispositif 29. Ce dernier est un dispositif de type connu comprenant 1728 ou 1024 photodiodes (selon les modèles) et qui «lit» les charges accumulées dans ces photoéléments. La dimension de chaque photodiode est de 13 µm × 13 µm et la résolution du système est de 38 pel/mm. Chaque photodiode est associée à une capacité qui accumule les électrons créés par la lumière d'où l'obtention de quantités de charges accumulées proportionnelles à l'éclairement reçu et au temps d'intégration. Une référence de noir est incluse dans le dispositif.

Les niveaux emmagasinés dans les capacités sont transférés de façon séquentielle dans un registre de lecture 33 qui se videra par un bus 34 dans un processeur de traitement d'image 35.

En fin de défilement de la zone codée, sous le système 28–29, l'image est stockée dans le processeur 35.

L'utilisateur du chèque compose par ailleurs sa combinaison secrète sur un clavier alphanumérique 36. Un processeur de traitement de combinaison 37 relié au bus 34 effectue une transcription codée de cette combinaison suivant le même processus de codage que celui utilisé pour l'encodage (figure 8). Un processeur 38 de dialogue et calcul relié au bus 34 «lit» les deux processeurs 35 et 37, les compare et signale la concordance ou l'absence de concordance entre la matrice codée portée sur le chèque et celle élaborée par le processeur 37 à partir de la combinaison introduite par l'utilisateur. Un dispositif de signalisation-visualisation 39 assure l'affichage des diverses informations nécessaires au processus (en particulier affichage de la combinaison composée sur le clavier 36 et du résultat de la comparaison).

Une telle lecture de la matrice codée est en fait une reconnaissance de deux formes distinctes ce qui confère au système une meilleure sécurité que la détection de l'absence ou de la présence de bits.

Il est nettement plus difficile, en effet, de contrefaire ou falsifier des formes spécifiques d'autant plus que le papier de sécurité des chèques interdit tout effacement.

Par forme on entend une succession de points ou traits reliés ou non entre eux et déterminant une lettre, un chiffre ou un signe quelconque. Il est intéressant d'utiliser deux des signes dont disposent les imprimantes actuelles mais l'invention permet de s'adapter à d'autres formes, par exemple des distributions particulières de points lisibles par le système 28–29, ces points pouvant être imprimés dans la zone 26 du chèque portant les éléments de personnalisation, ou mieux, constituant tout ou partie des caractères (lettres, chiffres ou signes) d'impression desdits éléments de personnalisation, ce dernier cas pouvant être envisagé avec des imprimantes à aiguilles.

L'encre utilisée pour l'impression de la matrice codée est bien entendu celle utilisée pour les autres informations imprimées dans la zone de personnalisation du chèque, car il n'est absolument pas nécessaire d'avoir une encre spéciale (magnétique, luminescente, etc...).

Les organes 28 à 29 sont regroupés dans un ensemble compact formant boîtier et constituant le lecteur.

Il est à noter que l'invention peut s'appliquer à tous types de document réservé. On entend par document réservé tout support rigide ou non, en un matériau quelconque, de dimensions et formes quelconques, qu'il soit à usage unique ou répété et susceptible de recevoir des informations codées réservées au seul titulaire du document et représentant un pouvoir d'achat, d'échange, une valeur d'argent, un crédit, une autorisation prédéterminée quelconques, etc... l'invention débordant donc largement du seul cadre du contrôle de l'usage des chèques.

Enfin, l'invention n'est évidemment pas limitée aux modes de réalisation représentés et décrits ci-dessus mais en couvre au contraire toutes les variantes restant dans le cadre des revendications, notamment en ce qui concerne les modes de codage, les moyens de représentation sur le document des informations codées et les moyens technologiques pour effectuer la comparaison entre le code lu sur le document et la combinaison détenue par le porteur du document.

## Revendications

1. Procédé pour réserver l'usage d'un document, tel qu'un chèque, au seul titulaire ou porteur habilité, ledit document comportant, dans une zone prédéterminée, une transcription codée d'une combinaison secrète détenue par le titulaire ou le porteur habilité, ladite transcription codée se présentant sous la forme d'une matrice à n lignes et p colonnes portant une information binaire aux intersections ligne-colonne, dans lequel, au moment de l'usage du document, le porteur de ce dernier fournit une combinaison à un dispositif de lecture du document qui lit également la transcription codée portée par le document et qui détermine s'il y a concordance ou non, caractérisé en ce que:

– avant la mise en service du document, le titulaire fournit de manière confidentielle à un dispositif d'encodage la combinaison secrète susdite constituée d'un ensemble de lettres et/ou chiffres quelconques, choisie arbitrairement par lui-même et connue de lui seul, le dispositif d'encodage génère ladite transcription codée de cette combinaison suivant un code indéchiffrable prédéterminé et on incorpore ensuite au document la transcription codée telle qu'elle est produite par le dispositif d'encodage, et

– au moment de l'usage du document, la combinaison fournie par le porteur au dispositif de lecture est transcrite suivant le même code pour comparaison avec la transcription codée lue sur le document.

2. Procédé suivant la revendication 1, caractérisé en ce que l'information binaire portée par chaque intersection ligne-colonne de ladite matrice de transcription revêt la forme de l'un ou l'autre de deux signes de formes différentes, lesdits signes étant des lettres, chiffres ou autres symboles.

3. Procédé suivant la revendication 1 ou 2, plus particulièrement appliqué à un chèque, caractérisé en ce que ladite transcription codée est générée par le dispositif d'encodage sur un support approprié puis transmise à l'imprimeur du chèque et, enfin, incorporé par impression sur le chèque, sur les lignes d'impression réservées aux informations de personnalisation, cette incorporation étant effectuée pendant l'impression desdites informations et par la même tête d'impression.

## Claims

1. A procedure for reserving the use of a document, such as a cheque, for the (document) holder alone or its entitled bearer, the said document comprising, in a predetermined area a coded transcription of a secret combination possessed by the holder or entitled bearer, said coded transcription being presented in the form of a matrix with n rows and p columns carrying binary information at the row/column intersections, in which, at the moment of using the document the bearer of the latter supplies a "combination" to a document reading device which also reads the coded transcription carried by the document and which determines whether there is agreement or not, characterised in that:

before using the document, the holder confidentially supplies to a coding device the above mentioned secret combination formed by an assembly of any letters and/or digits, selected arbitrarily by said holder and known only to him, the coding device generates the said coded transcription of this combination in accordance with a predetermined indecipherable code and then the coded transcription is incorporated in the document, said transcription being such as that produced by the coding device, and

at the moment of use of the document, the combination supplied by the bearer to the reading device is transcribed in accordance with the same code for comparison with the coded transcription read on the document.

2. A procedure in accordance with Claim 1, characterised in that the binary information carried by each row/column intersection of the said transcription matrix covers the form of one or the other of two signs of different types, said signs being letters, digits or other symbols.

3. A procedure in accordance with claim 1 or 2, more particularly applied to a cheque, characterised in that the said coded transcription is generated by the coding device on an appropriate base, then transmitted to the printer of the cheque and, finally, is incorporated by printing on to the cheque, on the printing lines reserved for personalised information, this incorporation being effected during printing of the said information and by the same printing head.

## Patentansprüche

1. Verfahren zur Reservierung der Benutzung eines Dokuments wie eines Schecks, für den einzigen Inhaber oder berechtigten Überbringer, wobei das Dokument in einer vorbestimmten Zone einer kodierten Übertragung einer von dem Inhaber oder berechtigten Überbringer bewahrten Geheimkombination umfasst, wobei die kodierte Übertragung sich in Form einer Matrix mit n Zeilen und p Spalten präsentiert, die in den Zeile-Spalte-Schnittpunkten binäre Informationen trägt, auf welchen im Augenblick der Benutzung des Dokuments der Überbringer des letzteren eine Kombination an eine Lesevorrichtung des Dokuments liefert, die auch die von dem Dokument getragene kodierte Übertragung liest und bestimmt, ob dort Übereinstimmung existiert oder nicht, dadurch gekennzeichnet, dass:

– Vor Inbetriebnahme des Dokuments der Inhaber an eine Kodiervorrichtung in vertraulicher Weise die oben erwähnte Geheimkombination eingibt, die gebildet wird von einem Satz Buchstaben und/oder irgendwelchen Ziffern, die er selbst willkürlich wählt und allein kennt, die Kodiervorrichtung die kodierte Übertragung dieser Kombination nach einem unentschlüsselbaren vorbestimmten Kode erzeugt und es wird daraufhin auf dem Dokument die kodierte Übertragung angebracht, so wie sie von der Kodiervorrichtung erzeugt wurde und

–im Augenblick der Benutzung des Dokuments die von dem Überbringer an die Lesevorrichtung gelieferte Kombination gemäss demselben Kode übertragen wird für einen Vergleich mit der auf dem Dokument gelesenen kodierten Übertragung.

2. Verfahren nach Anspruch 1, dadurch gekennzeichnet, dass die in jedem Zeile-Spalte-Schnittpunkt der Übertragungsmatrix liegende binäre Information die Form des einen oder des anderen der zwei Zeichen mit verschiedenen Formen ausstattet, wobei die Zeichen Buchstaben, Ziffern oder andere Symbole sind.

3. Verfahren nach Anspruch 1 oder 2, insbesondere angewendet auf einen Scheck, dadurch gekennzeichnet, dass die kodierte Übertragung durch die Kodiervorrichtung über einer geeigneten Halterung erzeugt wird, danach an den Scheckdrucker weitergegeben wird und schliesslich aufgebracht wird durch Drucken auf dem Scheck, auf den Drucklinien, die den Informationen zur Person reserviert sind, wobei dieses Aufbringen bewirkt wird während des Druckens der Informationen und mittels des gleichen Druckkopfes.

FIG 1

BANQUE NORMALE

B.P.F. _____

PAYEZ CONTRE CE CHEQUE
NON ENDOSSABLE

A _____

Payable

Compensable

A _____ , Le _____ 19 __

compte n°

### code binaire

| alphabet | poids → | D 8 | C 4 | B 2 | A 1 |
|---|---|---|---|---|---|
| A | | 0 | 0 | 0 | 0 |
| E | | 0 | 0 | 0 | 1 |
| I | | 0 | 0 | 1 | 0 |
| O | | 0 | 0 | 1 | 1 |
| U | | 0 | 1 | 0 | 0 |
| Y | | 0 | 1 | 0 | 1 |
| B ou Q | | 0 | 1 | 1 | 0 |
| C " Z | | 0 | 1 | 1 | 1 |
| D " N | | 1 | 0 | 0 | 0 |
| F " S | | 1 | 0 | 0 | 1 |
| G " P | | 1 | 0 | 1 | 0 |
| H " W | | 1 | 0 | 1 | 1 |
| J " V | | 1 | 1 | 0 | 0 |
| K " T | | 1 | 1 | 0 | 1 |
| L " R | | 1 | 1 | 1 | 0 |
| M " X | | 1 | 1 | 1 | 1 |

FIG 2

O C8  O Y  O n1  O B8  O D8  O C1  O A1
O D4  O C2  O B4  O A2  O B1  O n2  O B2
O A4  O n3  O D2  O C4  O X  O A8  O D1

FIG 3

FIG 4a

FIG 4b

lecteur 21 bits

code n lettres 3 bits
code 16 bits BCD
positionnement XY

5

transmission série

7

décodeur encodeur 16 b. BCD

8

| A | B | C | D | E | F | G |
| H | I | J | K | L | M | N |
| O | P | Q | R | S | T | U |
| V | W | X | Y | Z | | |

6

9

micro. 8 bits
décodeur
comparateur

4

annulation

nul

15

merci

13

erreur

14

10

introduisez le document

verrouillage document

11

composez votre code

12

**FIG 5**

OBAYARD

18

décodeur

19

16

clavier alphabétique

validation | raz

21

codage mot proposé

compt. n lettres

codage n lettres

analyse code

17

sélection du code

fonction de n lettres

20

bloc d'impression

**FIG 6**

$\ell$
| | | | | | | |
|---|---|---|---|---|---|---|
| — | — | × | — | × | — | — |
| × | × | × | × | — | — | × |
| × | × | — | × | × | × | × |

## FIG_7_

```
┌─────────────────────────────┐
│ Clavier Alpha numérique     │
│ Composition d'un mot secret │────  22
└─────────────────────────────┘
              │
              ▼
┌─────────────────────────────┐
│ Registre de stockage après  │────  23 ──────────────┐
│ codage de chaque lettre  ou │                       │
│ chiffre                     │                       │
└─────────────────────────────┘                       │
              │                                        │
              ▼                                        ▼
┌─────────────────────────────┐    ┌──────────────────────────────┐
│ Calcul de la valeur du mot  │───▶│ Permutation des lettres      │
│                             │    │ fonction de la valeur du mot │
└─────────────────────────────┘    └──────────────────────────────┘
              │                                        │
              └──────────────┬─────────────────────────┘
                             ▼
          ┌─────────────────────────────┐
          │ Choix d'une matrice aléatoire│
          └─────────────────────────────┘
                             │
                             ▼
          ┌─────────────────────────────┐
          │ Affectation du poids des    │
          │ lettres  du mot             │
          └─────────────────────────────┘
                             │
                             ▼
          ┌─────────────────────────────┐
          │ Disposition des poids des   │
          │ lettres dans la matrice     │
          └─────────────────────────────┘
                             │
                             ▼
          ┌─────────────────────────────┐
          │ Obtention d'une matrice de  │
          │ 21 caractères après nouvel_ │
          │ les permutations            │
          └─────────────────────────────┘
```

## FIG. 8